# EUROPEAN PATENT APPLICATION

(11) **EP 4 593 189 A1**
(43) Date of publication of application: **30.07.2025**
(21) Application number: 23904019.9
(22) Date of filing: 14.12.2023
(51) Int. Cl.: H01M 50/531, B23K 20/10, B23K 26/21, B23K 101/36

(54) **LEAD TAB FOR JOINING TO ELECTRODE TAB, METHOD FOR JOINING SAME TO ELECTRODE TAB, AND LITHIUM SECONDARY BATTERY INCLUDING STRUCTURE HAVING LEAD TAB JOINED TO ELECTRODE TAB**

(30) Priority: 14.12.2022 KR 20220175173
(71) Applicant: LG Energy Solution, Ltd., Seoul 07335 (KR)
(72) Inventor: LEE, Hyunsoo, Daejeon 34122 (KR); HONG, Kyungsik, Daejeon 34122 (KR); KWON, Soon Kwan, Daejeon 34122 (KR); LEE, Mijin, Daejeon 34122 (KR); LEE, Junghoon, Daejeon 34122 (KR)
(74) Representative: Goddar, Heinz J.
(86) International application number: PCT/KR2023/020615
(87) International publication number: WO 2024/128820

(57) **Abstract**

A lead tab for bonding an electrode tab, a method for bonding the lead tab to the electrode tab, and a lithium secondary battery including a structure in which the lead tab is bonded to the electrode tab, which can prevent deformation of a lithium negative electrode tab by exposure while improving the physical strength and safety of the bonding area, are disclosed. The lead tab for bonding to the electrode tab includes: a first metal lead for bonding to the electrode tab of the electrode assembly for the lithium secondary battery; and a second metal lead, one end of which is in contact with the first metal lead, capping the electrode tab to form a bonding area.

## Description

### [Technical Field]

The present application claims the benefit of priority to Korean Patent Application No. 10-2022-0175173, filed December 14, 2022, the disclosure of which is incorporated herein by reference in its entirety.

The present invention relates to a lead tab for bonding an electrode tab, a method for bonding the lead tab to the electrode tab, and a lithium secondary battery comprising a structure in which the lead tab is bonded to the electrode tab, the lead tab for bonding the electrode tab, a method for bonding the lead tab to the electrode tab, and a lithium secondary battery comprising a structure in which the lead tab is bonded to the electrode tab, which can prevent deformation of the lithium negative electrode tab by exposure while improving physical strength and safety of a bonding area.

### [Background Art]

The growing interest in energy storage technologies, with applications ranging from cell phones, tablets, laptops and camcorders to energy for electric vehicles (EVs) and hybrid electric vehicles (HEVs), has led to an increasing amount of research and development in electrochemical devices. The development of lithium secondary batteries, such as lithium-sulfur batteries that can be charged and discharged, has been the focus of attention in this regard. In recent years, the development of such batteries has led to research and development of new electrodes and battery designs to improve the capacity density and specific energy.

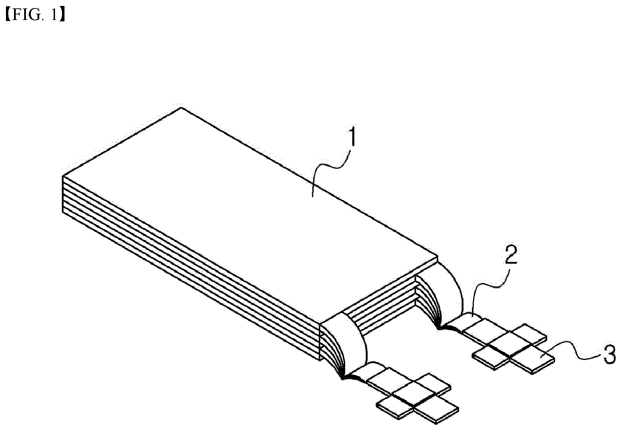

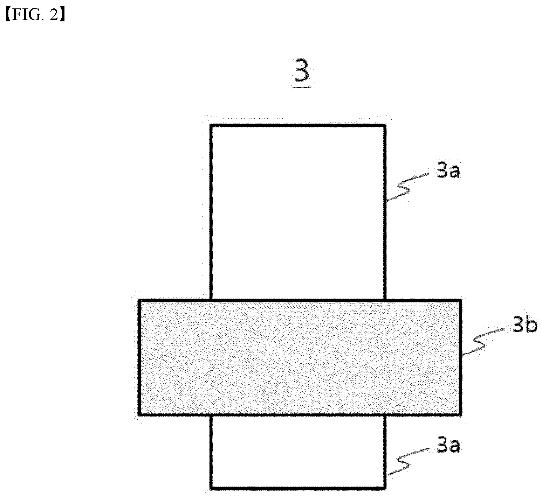

In the fabrication of such lithium secondary batteries, welding operations are performed to bind the tabs between the unit electrodes to achieve the desired output for the application, a process known as bonding the electrode tabs and lead tabs. FIG. 1 is a perspective view of an electrode tab and a lead tab being bonded in a conventional secondary battery, and FIG. 2 is a plan view of a lead tab being bonded to an electrode tab in a conventional secondary battery. As shown in FIG. 1, a conventional secondary battery requires an electrode tab (positive electrode tab or negative electrode tab, 2) to electrically connect the positive electrode plates and negative electrode plates comprising an electrode assembly 1 to an external device. The electrode tab 2 is then bonded to a lead tab (positive electrode lead tab or negative electrode lead tab, 3) as shown in FIG. 2 by welding. Further, the lead tab 3 includes a metal lead 3a and a lead film 3b locally located on one or both sides thereof, as shown in FIG. 2, in which the metal lead 3a located on one side thereof is bonded overlappingly with the electrode tab.

More specifically, most lithium secondary batteries employ bonding, typically by ultrasonic welding, laser welding, or resistance welding, between a negative electrode tab (copper) or positive electrode tab (aluminum) and a lead tab (copper, nickel, etc.). For example, lithium ion batteries use copper (Cu) as a negative electrode tab and weld it to a lead tab (Ni) to bond the electrode tab and the lead tab.

However, lithium-sulfur batteries, which are attracting attention as a next-generation secondary battery that can replace lithium ion batteries, do not use a separate collector for the negative electrode, but only pure lithium metal (Li-metal). In other words, lithium-sulfur batteries have a negative electrode composed entirely of lithium. In addition, lithium has a low melting point compared to other metals, is easily broken or deformed due to its soft nature, and is potentially explosive when exposed to air, so it is difficult to actively utilize it as a battery material. In addition, due to these unique properties of lithium, it is difficult to bond the lithium negative electrode tab and the lead tab electrically connected to it.

In other words, if a lead tab that is bonded to the negative electrode tab of a typical lithium secondary battery is applied to a lithium-sulfur battery, problems caused by lithium are bound to appear. Therefore, it is necessary to develop a new lead tab that can be applied to a lithium-sulfur battery while preventing problems such as deformation of the lithium negative electrode tab.

### [Disclosure]

### [Technical Problems]

Accordingly, it is an object of the present invention to provide a lead tab for bonding an electrode tab, a method for bonding the lead tab to the electrode tab, and a lithium secondary battery comprising a structure in which a lead tab is bonded to an electrode tab, which can prevent deformation of the lithium negative electrode tab by exposure while improving the physical strength and safety of the bonding area.

### [Technical Solutions]

In order to achieve the aforementioned objects, the present invention provides a lead tab for bonding an electrode tab of an electrode assembly for a lithium secondary battery, comprising: a first metal lead; and a second metal lead, one end of which is in contact with the first metal lead, capping the electrode tab to form a bonding area.

The present invention also provides a method of bonding the electrode tab of the electrode assembly for the lithium secondary battery to the lead tab, comprising: a) positioning the electrode tab on any one end of the second metal lead of the lead tab; b) capping a surface of the electrode tab by winding both ends of the second metal lead located in a direction perpendicular to a direction of bonding to the electrode tab so as to meet together; and c) bonding the second metal lead to the electrode tab by contactless welding.

Further, the present invention provides a lithium secondary battery comprising a structure in which the lead tab according to claim 1 is bonded to the electrode tab.

### [Advantageous Effects]

A lead tab for bonding an electrode tab, a method for bonding the lead tab to the electrode tab, and a lithium secondary battery including a structure in which the lead tab is bonded to the electrode tab according to the present invention has the advantage of capping the lithium negative electrode tab with a specific member of the lead tab so as to prevent deformation and the like due to exposure of the lithium negative electrode tab, and also has the advantage of improving the physical strength of a bonding area.

Also, the lead tab for bonding the electrode tab, the method for bonding the lead tab to the electrode tab, and the lithium secondary battery including the structure in which the lead tab is bonded to an electrode tab according to the present invention has the advantage of making the capping more robust by additionally including a bonding film on the specific member of the lead tab.

Also the lead tab for bonding the electrode tab, the method for bonding the lead tab to the electrode tab, and the lithium secondary battery including the structure in which the lead tab is bonded to an electrode tab according to the present invention has the advantage of physically further protecting the bonding area of the lithium negative electrode tab and the lead tab and provide an insulation effect by additionally providing a protective film on the certain member of the lead tab.

### [Brief Description of Drawings]

FIG. 1 is a perspective view of the bonding of electrode tabs and lead tabs in a conventional secondary battery.
FIG. 2 is a top view of a lead tab bonded to an electrode tab in a conventional secondary battery.
FIG. 3 is a top view of a lead tab for bonding an electrode tab, according to an example of the present invention.
FIG. 4(a) is a vertical cross-sectional view showing a positional relationship of a first metal lead and a lead film in a lead tab for bonding an electrode tab according to an example of the present invention, and FIG. 4(b) is a vertical cross-sectional view showing a positional relationship of a first metal lead and a second metal lead in a lead tab for bonding an electrode tab according to an example of the present invention, when the first metal lead protrudes through the lead film.
FIG. 5 is a schematic view showing an electrode tab capped with a lead tab for bonding an electrode tab according to the present invention.
FIG. 6 is a top view of a lead tab for bonding an electrode tab, according to another example of the present invention.
FIG. 7 is a vertical cross-sectional view showing the electrode tab capped with the lead tab of FIG. 6.
FIG. 8 is a vertical cross-sectional view of a lead tab for bonding an electrode tab, according to another example of the present invention.
FIG. 9 is a vertical cross-sectional view showing the electrode tab capped with the lead tab of FIG. 8.

### [Best Mode]

The present invention will be hereinafter described in detail with reference to the accompanying drawings so as to facilitate the practice by a person of ordinary skill in the technical field to which the present invention pertains. However, the present invention may be implemented in a number of different forms, and the present invention is therefore not limited to the examples described herein. Furthermore, in order to more clearly illustrate the features of the present invention, it is disclosed that parts of the disclosure that deviate from the main configuration may be omitted from the drawings.

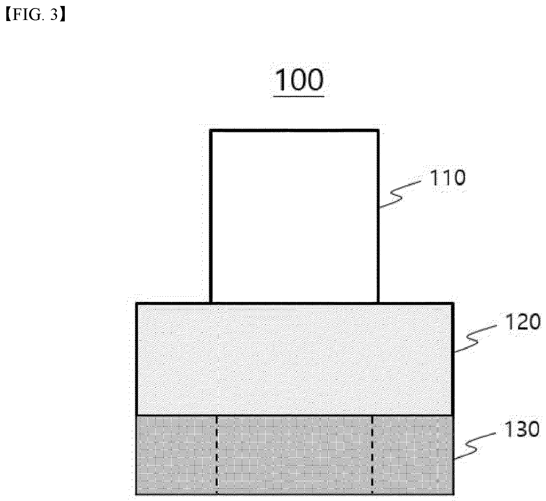

FIG. 3 is a top view of a lead tab for bonding electrode tabs according to an example of the present invention. A lead tab 100 for bonding electrode tabs according to the present invention is designed to be bonded to electrode tabs of an electrode assembly for a lithium secondary battery, and the electrode tab 100 comprises, as shown in FIG. 3: a (planar) first metal lead 110; and a second metal lead 130, in which at least one end of the second metal lead 130 is in contact with the first metal lead 110, and caps the electrode tab to form a bonding area.

Furthermore, the lead tab may further comprise a lead film 120 locally located on one or both sides of the first metal lead 110. For example, the second metal lead 130 may be shaped to extend from the lead film 120, but may be positioned separate from the lead film 120 at both ends in a direction perpendicular to the direction of bonding with the electrode tab.

Furthermore, the electrode tab of the electrode assembly for the lithium secondary battery is preferably a lithium negative electrode tab of the electrode assembly for the lithium-sulfur battery.

Typically, when a lithium secondary battery is fabricated, a welding operation is performed to bind the tabs between the unit electrodes in order to achieve a suitable output for the application, which involves welding conventional lead tabs as shown in FIG. 2 to the electrode tab as shown in FIG. 1. Furthermore, most lithium secondary batteries typically employ ultrasonic welding, laser welding, or resistance welding to bond the negative electrode tab (copper) or positive electrode tab (aluminum) to the lead tab (copper, nickel, etc.). For example, lithium ion batteries use copper (Cu) as the negative electrode tab and weld it to the lead tab (Ni) to bond the electrode tab to the lead tab.

However, a lithium-sulfur battery, which has been attracting attention as a next-generation secondary battery that can replace lithium ion batteries, does not use a separate collector for the negative electrode, but only pure lithium metal (Li-metal). Lithium has a low melting point compared to other metals, is easily broken or deformed due to its soft nature, and is potentially explosive when exposed to air, making it difficult to actively utilize as a battery material. Due to these unique properties of lithium, it is also difficult to bond the lithium negative electrode tab and the lead tab electrically connected to it. In other words, it is not easy to apply lead tabs for bonding negative electrode tabs used in typical lithium secondary batteries to lithium-sulfur batteries.

Accordingly, the present applicant has additionally configured a specific member (second metal lead 130) to the conventional lead tab, and by capping the lithium negative electrode tab with this additional configuration, it is possible to prevent deformation of the lithium negative electrode tab by exposure, etc. Hereinafter, the lead tab for bonding an electrode tab according to the present invention will be described in more detail.

First, a first metal lead 110 of the present invention and a lead film 120, which may be locally disposed on one or both sides of the first metal lead 110, may be conventional, i.e., the first metal lead 110 may be made of a material of a metal lead that bonds to a conventional lithium negative electrode tab, such as nickel. The lead film 120 may also be made of the same material as the lead film of the lead tab that bonds to the conventional lithium negative electrode tab, such as polypropylene.

The second metal lead 130 is in a sheet-shape, and the sheet-shaped second metal lead 130 can be wound on the electrode tab to form a bonding area in which the second metal lead 130 is wound on the electrode tab. By doing so, it is possible to prevent the lithium negative electrode tab from being deformed by exposure, and it is also possible to prevent physical contact with other parts inside the cell except the lithium negative electrode tab and the lead tab. Further, the first metal lead 110 may or may not be included in the bonding area. If the bonding area further includes a portion of the first metal lead 110, then, based on a vertical cross-section of the bonding area, an end of the first metal lead 110 is interposed between the electrode tab and the second metal lead 130 in some area. Further, even when the first metal lead 110 is not included in the bonding area, the first metal lead 110 is in contact with the second metal lead 130 at least at one end or on one side thereof. Furthermore, whether the first metal lead 110 is included in the bonding area or not, the first metal lead 110 and the second metal lead 130 may be brought into contact, for example, by welding. However, as long as the first metal lead 110 and the second metal lead 130 can be brought into contact, there is no particular limitation on the means of bringing them into contact.

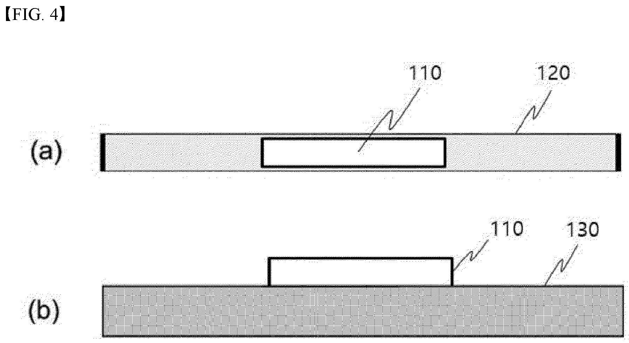

FIG. 4(a) is a vertical cross-sectional view showing a positional relationship of the first metal lead and the lead film in the lead tab for bonding the electrode tab according to an example of the present invention; and FIG. 4(b) is a vertical cross-sectional view showing a positional relationship of the first metal lead and the second metal lead in the lead tab for bonding the electrode tab according to an example of the present invention, when the first metal lead protrudes through the lead film. Here, a case is described in which the lead tab further comprises the lead film 120 locally located on one or both sides of the first metal lead 110. The lead film 120 may be locally located on both a top and a bottom of the first metal lead 110 in a form that surrounds the first metal lead 110, as shown in FIG. 4(a). And, in this case, one end of the first metal lead 110 which is located in the direction of bonding with the electrode tab (lithium negative electrode tab) may be located only up to the point where an end of the lead film 120 is located (i.e., the boundary surface of the lead film and the second metal lead). Alternatively, the one end of the first metal lead 110 may pass through the boundary surface of the lead film 120 and the second metal lead 130 and be located superimposed on the top surface of the second metal lead 130, as shown in FIG. 4(b).

If one end of the first metal lead 110 located in the direction of bonding with the electrode tab is located on the boundary surface of the lead film 120 and the second metal lead 130, a conduction structure is formed in the order of the electrode tab, the second metal lead 130, and the first metal lead 110. Furthermore, when one end of the first metal lead 110 which is located in the direction of bonding with the electrode tab passes through the boundary surface of the lead film 120 and the second metal lead 130 and is superimposed on the top surface of the second metal lead 130, the first metal lead 110 and the second metal lead 130 are together in contact with the electrode tab. Of these, when the lead tab is configured so that the first metal lead 110 and the second metal lead 130 are together in contact with the electrode tab, the lead tab is easier to fabricate than when the lead tab is fabricated such that the electrode tab, the second metal lead 130, and the first metal lead 110 form a conduction structure in that order, and the electrical conductivity can exhibit an equivalent or higher level.

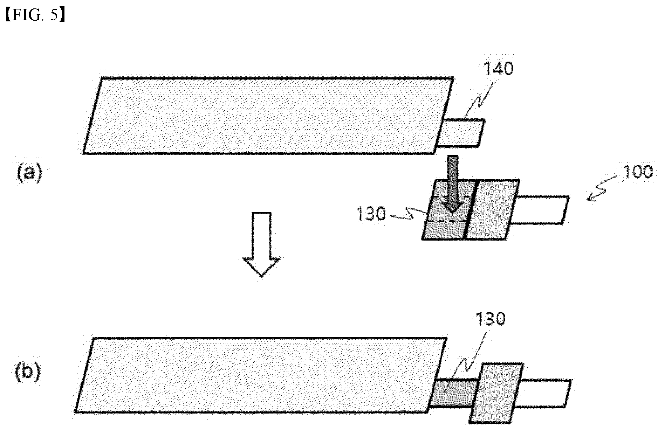

FIG. 5 is a schematic view of capping the electrode tab with the lead tab for bonding the electrode tab according to the present invention, in which FIG. 5(a) is a view prior to positioning the electrode tab on the second metal lead 130 of the lead tab; and FIG. 5(b) is a view after positioning the electrode tab on the second metal lead 130 of the lead tab, and then folding the remaining portion of the second metal lead 130 on which the electrode tab is not positioned to cap the electrode tab. As shown in FIG. 5, the remaining portion of the second metal lead 130 on which the electrode tab 140 is not located (i.e., at least one of the both ends) can be folded in a direction perpendicular to the longitudinal direction of the first metal lead 110 to cap the electrode tab 140. Thus, after capping the electrode tab 140 with the second metal lead 130 of the lead tab 100, the electrode tab 140 is contained within the second metal lead 130 and is not exposed to the outside.

The dotted line shown on the second metal lead 130 in FIGS. 3 and 5 indicates a folded portion when capping the electrode tab 140, which is merely an example shown for illustrative purposes. Therefore, the folded portion of the second metal lead 130 is not particularly limiting as long as the second metal lead 130 can cap the electrode tab 140 so that the electrode tab 140 is not exposed to the outside. Furthermore, when capping the electrode tab 140 with the second metal lead 130, it may be wound in a circular shape without folding, in which case a folded portion is also not required.

The material of the second metal lead 130 may be selected from a group consisting of nickel, metals having similar or identical properties thereto, and alloys comprising two or more of the foregoing. Further, the second metal lead may have a structure or form in which one metal is plated on a surface of another metal, for example, a thin film of nickel on a surface of copper. The second metal lead 130 may be made of the same material as the first metal lead 110, or it may be different. However, it is preferred that the material of the second metal lead 130 is the same as the material of the first metal lead 110 so that a stable conduction structure can be formed to exhibit a constant electrical conductivity. Furthermore, the thickness of the second metal lead 130 may vary depending on the thickness of the electrode tab (negative electrode lithium tab), but the thickness ratio of the electrode tab and the second metal lead 130 may be 7 to 15 : 1, preferably 9 to 12 : 1, and more preferably about 10 : 1.

Furthermore, the length of the second metal lead 130 (i.e., a length in a direction perpendicular to a length direction of the first metal lead) is sufficient to allow the electrode tab 140 to be capped and contained. Furthermore, the width of the second metal lead 130 is sufficient to allow the electrode tab 140 to be enclosed by capping. Thus, the length and width of the second metal lead 130 may be appropriately adjusted to fit the dimensions of the electrode tab 140.

On the other hand, as previously described, the first metal lead 110's one end, which is located in the direction of bonding with the electrode tab, may be located at a boundary surface of the lead film 120 and the second metal lead 130, or may pass through the boundary surface of the lead film 120 and the second metal lead 130 and be superimposed on the top surface of the second metal lead 130, as shown in FIG. 4(b). In the former case, the second metal lead 130 may be attached via an adhesive component to the end surface toward the electrode tab of the first metal lead 110 and the end surface of the lead film 120 toward the electrode tab. However, it is preferred that the portion that is folded to cap the electrode tab in the second metal lead 130 is not use for adhesion. And, in the latter case, the second metal lead 130 may be attached to the bottom surface of the first metal lead 110 via an adhesive component.

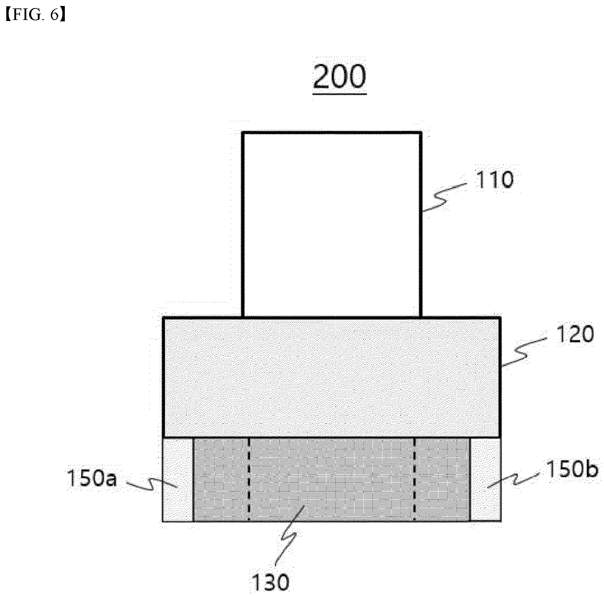

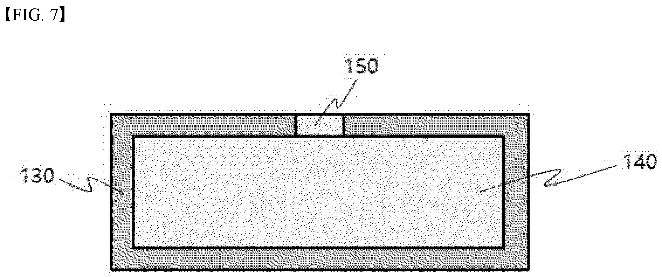

FIG. 6 is a plan view of a lead tab for bonding an electrode tab according to another example of the present invention, and FIG. 7 is a vertical sectional view showing the electrode tab capped with the lead tab of FIG. 6. On the other hand, the lead tab 200 for bonding the electrode tab according to another example of the present invention further comprises lead bonding films 150, as shown in FIG. 6, which are attached in an extending form to each of both ends of the second metal lead 130 (relative to a direction perpendicular to a length direction of the first metal lead), as required. The lead bonding films 150 are intended to prevent problems that may occur when capping the electrode tab with the second metal lead 130 alone. Furthermore, by attaching the lead bonding films 150 in a form extending from each of the both ends of the second metal lead 130, when capping the electrode tab with the second metal lead 130, the second metal lead 130 is fixed through an engagement between the lead bonding films 150a, 150b, as shown in FIG. 7. Expressing this as the case when the electrode tab is capped with the second metal lead 130, both ends of the direction in which the second metal lead 130 is wound are fixed with the lead bonding films 150.

More specifically, without the lead bonding films 150 attached to the second metal lead 130, i.e., as shown in FIG. 3, the both ends of the second metal lead 130 can be folded so as to touch or overlap when capping the electrode tab. In this case, if the both ends of the second metal lead 130 are brought into contact, there is no problem, but if the both ends of the second metal lead 130 are overlapped, a deviation is likely to occur. Therefore, if the electrode tab is capped while the lead bonding films 150 are attached to both ends of the second metal lead 130, bonding or attachment is possible only between one lead bonding film 150a and the other lead bonding film 150b, thereby eliminating room for a deviation to occur. Furthermore, even if the lead bonding film 150a is not used, the length of the direction in which the second metal lead 130 is wound is preferably the same or shorter than the peripheral length of the electrode tab. Furthermore, the lead bonding films 150 may be made of a material selected from a group consisting of polypropylene, a polymer compound having similar or identical physical properties thereto, and mixtures thereof, of which polypropylene alone may be most preferred.

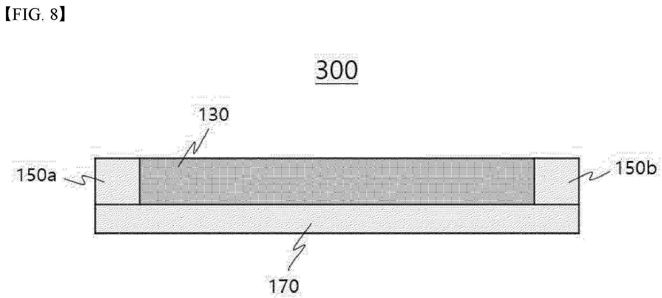

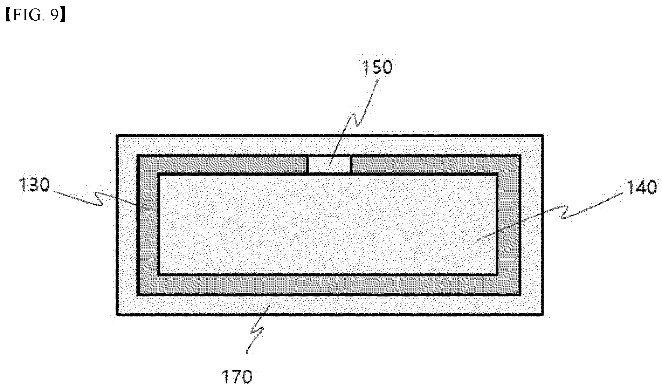

FIG. 8 is a vertical cross-sectional view of a lead tab for bonding an electrode tab according to another example of the present invention; FIG. 9 is a vertical cross-sectional view showing the electrode tab capped with the lead tab of FIG. 8. Meanwhile, the lead tab 300 for bonding the electrode tab according to another example of the present invention further comprises one or more protective films 170 attached to a bottom surface of the second metal lead 130 as shown in FIG. 8, as needed (or the second metal lead further comprises one or more protective films attached to a bottom surface thereof). In other words, the protective film 170 is a component for further capping the second metal lead 130 with the electrode tab 140 as shown in FIG. 9 (i.e., capping the electrode tab with the second metal lead causes the protective film to form a capping portion (or, bonding area), which can further physically protect the electrode tab 140, as well as have an insulating effect, and also have the effect of sealing the area where the electrode tab is withdrawn from the electrode assembly. Furthermore, the protective film 170 may be made of a material selected from a group consisting of polypropylene, polymeric compounds having similar or identical properties thereto, and mixtures thereof, of which polypropylene may be most preferred.

Hereinafter, a method of bonding the lead tab to the electrode tab according to the present invention will be described with reference to FIG. 5. The method of bonding the lead tab to the electrode tab accomplishes bonding the lead tab described above to the electrode tab of an electrode assembly for a lithium secondary battery, and comprises: a) positioning the electrode tab 140 on one end of a second metal lead 130 of the lead tab 100, b) capping a surface of the electrode tab 140 by winding both ends of the second metal lead 130 located in a direction perpendicular to the direction of bonding with the electrode tab 140 so that the both ends of the second metal lead 130 meet; and c) bonding the second metal lead 130 and the electrode tab 140 by contactless welding.

Furthermore, in the method of bonding the lead tab to the electrode tab, the second metal lead 130 may be the one having lead bonding films 150 attached to both ends (see FIGS. 6 and 9). Further, the second metal lead 130 may have a protective film 170 attached to its bottom surface (see FIGS. 8 and 9), in other words, the second metal lead 130 of step a) above may further comprise a protective film attached to its bottom surface, wherein step c) above may further comprise the step of thermal fusing the protective film.

This is because, by performing the thermal fusion, not only can the electrode tab 140 be better protected physically, but also the effect of sealing the area where the electrode tab 140 is withdrawn from the electrode assembly can be further improved. Therefore, when the protective film 170 is used, the lead tab and the electrode tab can be first bonded by welding, and then the protective film 170 can be thermally fused at a temperature of about 110 to 150 °C, preferably about 120 to 140 °C. And, at this time, the second metal lead 130 and the area where the electrode tab 140 is withdrawn from the electrode assembly can be bonded with the protective film 170 to provide a more robust seal. Specific methods for bonding the lead tabs and electrode tabs are as described above. On the other hand, the non-contact welding may be a typical welding method known as non-contact welding, such as ultrasonic welding and laser welding. Therefore, no special restrictions are placed on the welding conditions.

Hereinafter, a lithium secondary battery according to the present invention will be described. The lithium secondary battery comprises a structure in which the lead tab as previously described is bonded to the electrode tab, that is, a structure comprising: a first metal lead; and a second metal lead, wherein one end of the second metal lead is in contact with the first metal lead, and caps the electrode tab to form a bonding area. Furthermore, the lithium secondary battery is preferably a lithium-sulfur battery, and the electrode tab of the electrode assembly for the lithium secondary battery is preferably a lithium negative electrode tab.

In an example of the present invention, the lithium secondary battery may be fabricated to include: a positive electrode, a negative electrode, a separator interposed between the positive electrode and the negative electrode, and an electrolyte. Furthermore, the lithium secondary battery may be fabricated by any known method in any configuration known in the art, with the exception of the lead tabs and the structure in which the lead tabs are bonded to the electrode tabs. The following briefly describes the positive electrode, the separator, and the electrolyte.

The positive electrode included in a lithium secondary battery of the present invention may include: a positive-electrode active material, a binder, and a conductive material. The positive-electrode active material may be a sulfur-carbon composite ((C₂Sₓ)ₙ : x=2.5 to 50, n≥2) in which sulfur is impregnated into a porous carbon material. The sulfur may be elemental sulfur (S₈), a sulfur-based compound, or a mixture thereof, in which the sulfur-based compound may be, for example, Li₂Sₙ (n≥1) or an organosulfur compound. The carbon material may be any one of carbon nanotubes; graphene; graphite; carbon black, such as carbon black, acetylene black, ketchen black, denka black, thermal black, channel black, furnace black, lamp black and the like; carbon fiber; and mixtures comprising two or more of the foregoing.

The binder is a component that aids in the bonding of the positive-electrode active material to the conductive material and the binding to the collector, and may be, although not limited thereto, one or more selected from the group consisting of: such as polyvinylidene fluoride (PVdF), polyvinylidene fluoride-polyhexafluoropropylene copolymer (PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene (PTFE), polyvinyl chloride, polyacrylonitrile, polyvinyl pyridine, polyvinylpyrrolidone, styrene-butadiene rubber, acrylonitrile-butadiene rubber, ethylenepropylene-diene monomer (EPDM) rubber, sulfonated EPDM rubber, styrene-butylene rubber, fluorinated rubber, carboxymethyl cellulose (CMC), starch, hydroxypropyl cellulose, regenerated cellulose, and mixtures thereof.

The conductive material is not particularly limited as long as it has excellent electrical conductivity in the internal environment of the lithium secondary battery without causing side reactions and without causing chemical changes in the battery, and graphite or conductive carbon can be used as a representative, for example, graphite such as natural graphite, artificial graphite, etc.; carbon black such as carbon black, acetylene black, ketchen black, dengka black, thermal black, channel black, furnace black, lamp black, etc; carbon-based materials with a crystal structure of graphene or graphite; conductive fibers such as carbon fibers and metal fibers; carbon fluoride; metal powders such as aluminum and nickel powders; conductive whiskers such as zinc oxide and potassium titanate; conductive oxides such as titanium oxide; and conductive polymers such as polyphenylene derivatives, can be used alone or in a mixture of two or more types, but are not limited thereto.

A positive electrode can be fabricated by dispersing and mixing the above positive-electrode active material, binder, and conductive material in a dispersant (solvent) to form a slurry, applying it to a positive electrode collector, and drying and rolling it. The dispersant may include N-methyl-2-pyrrolidone (NMP), dimethyl formamide (DMF), dimethyl sulfoxide (DMSO), ethanol, isopropanol, water, and mixtures thereof, although not limited thereto.

The positive electrode collector may be made of platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), and alloys thereof, and aluminum (Al) or stainless steel with a carbon (C), nickel (Ni), titanium (Ti), or silver (Ag) surface treatment may be used, although not limited thereto. The positive electrode collector may be in the form of foil, film, sheet, punched, porous, foam, or the like.

The separator is interposed between the positive electrode and the negative electrode to prevent a short circuit between them and to provide a migration passage for the lithium ions. As the separator, olefin-based polymers such as polyethylene and polypropylene, glass fibers and the like can be used in the form of sheets, multi-layers, microporous films, woven and nonwoven fabrics and the like, but are not necessarily limited thereto. On the other hand, when a solid electrolyte (e.g., an organic solid electrolyte, an inorganic solid electrolyte, etc.) such as a polymer is used as an electrolyte, the solid electrolyte may also serve as a separator.

The electrolyte may be a solid electrolyte or a liquid electrolyte, and as the liquid electrolyte, for example, a non-aqueous electrolyte may be used. The non-aqueous electrolyte may include, but is not limited to, a carbonate, an ester, an ether, or a ketone, either alone or in a mixture of two or more. For example, dimethyl carbonate, diethyl carbonate, dipropyl carbonate, methylpropyl carbonate, ethylpropyl carbonate, methylethyl carbonate, ethylene carbonate, propylene carbonate, butylene carbonate, gamma-butylolactone, n-methyl acetate, n-ethyl acetate, n-propyl acetate, phosphoric acid triester, dibutyl ether, N-methyl-2-pyrrolidinone, 1,2-dimethoxyethane, tetrahydrofuran derivatives such as 2-methyl tetrahydrofuran, dimethyl sulfoxide, formamide, dimethylformamide, dioxolane and its derivatives, acetonitrile, nitromethane, methyl formate, methyl acetate, trimethoxymethane, sulfolane, methyl sulfolane, 1,3-dimethyl-2-imidazolidinone, methyl propionate, ethyl propionate, and other non-amphoteric organic solvents may be used, although not limited thereto.

Lithium salts may additionally be added to the above electrolyte. As lithium salts, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiPF₃(CF₂CF₃)₃, LiAlCl₄, CH₃SO₃Li, CF₃SO₃Li, (CF₃SO₂)₂NLi, lithium chloroborane, low aliphatic lithium carbonate, lithium tetraphenylborate, lithium imide and the like may be used, although not limited thereto.

On the other hand, the lithium secondary battery according to the present invention can be applied to a battery cell used as a power source for a small device, as well as being particularly suitable as a unit battery in a battery module that is a power source for a medium or large device. In this respect, the present invention also provides a battery module comprising two or more lithium secondary batteries which are electrically connected (in series or in parallel). Of course, the quantity of lithium secondary batteries included in the battery module may be varied in consideration of the use and capacity of the battery module. Furthermore, the present invention provides a battery pack electrically connected to the battery module in accordance with conventional techniques in the art. The battery module and battery pack may be used to power one or more medium to large devices, including, but not limited to, a power tool; an electric vehicle, including an electric vehicle (EV), a hybrid electric vehicle (HEV), and a plug-in hybrid electric vehicle (PHEV); an electric truck; an electric commercial vehicle; or a system for power storage.

Hereinafter, a preferred example of the present invention is set forth below for the purpose of illustrating the present invention, but it will be apparent to those skilled in the art that various changes and modifications are possible within the scope and technical thought of the present invention, and that such changes and modifications fall within the scope of the appended patent claims.

### [Example 1] Bonding of Electrode Tabs and Lead Tabs

An electrode assembly was fabricated by stacking unit cells comprising: a sulfur-carbon composite as a positive electrode active material, a lithium metal cathode, and a polyethylene separator interposed between them.

Furthermore, separately, a lead tab comprising a first metal lead (nickel) having a planar shape, a lead film (polypropylene) locally located on a first surface of the first metal lead, and a second metal lead (nickel) having a shape extending from the lead film but separate from the lead film at both ends was fabricated.
(* Bonding condition of the first metal lead and the second metal lead - Weld time: 0.02 to 0.03 sec, Hold time: 0.02 to 0.03 sec, Amp(%): 70 to 80 %)

Then, each of the negative electrode tabs (lithium) was placed on the center portion of the second metal lead of the lead tab, and the surfaces of the negative electrode tabs were capped by folding the both ends of the second metal lead to meet, and ultrasonic welding was performed on the capped area to bond the negative electrode tabs and the lead tabs.

### [Example 2] Bonding Electrode Tab and Lead Tab

Instead of the second metal lead used in Example 1 above, a second metal lead with lead bonding films (polypropylene) attached to each of its both ends in the form of an extension was used, and the lead bonding film was bonded to each other when the second metal lead was used to cap the negative electrode tabs, and the negative electrode tabs and the lead tab were bonded by performing the same as in Example 1 above.

### [Example 3] Bonding Electrode Tabs and Lead Tab

Bonding the negative electrode tabs and the lead tabs was performed in the same manner as in Example 1 above, except that, instead of the second metal lead used in Example 1 above, a second metal lead with a protective film (polypropylene) attached to its bottom surface was used, so that the protective film was located at the outermost part of the capping area after capping.

### [Comparative Example 1] Bonding of Electrode Tabs and Lead Tabs

A conventional lead tab that does not include a second metal lead (based on Example 1, only a first metal lead and a lead film are included) was used, and the negative electrode tabs and the lead tab were bonded by performing the same as in Example 1 above, except that the negative electrode tabs were simply bonded to one side of the first metal lead.

### [Experimental Example 1] Measurement of the Strength of the Bonding Area of the Electrode Tab and the Lead Tab

The tensile strengths of the bonded electrode tabs and lead tab of Examples 1 to 3 and Comparative Example 1 were measured, and the results are shown in Table 1 below. AMETEK's UTM equipment and a weight of 600 N were used to measure the tensile strengths.

**[Table 1]**

| | Tensile strength (Unit: kgf/mm) |
|---|---|
| Example 1 | 0.32 |
| Example 2 | 0.27 |
| Example 3 | 0.34 |
| Comparative Example 1 | 0.12 |

As shown above, the tensile strength of the bonding area of the bonded electrode tabs and the lead tabs in Examples 1 to 3 and Comparative Example 1 was measured, and it can be seen that Examples 1 to 3, in which the surface of the lithium negative electrode tab is capped so that it is not exposed, have very good tensile strength compared to Comparative Example 1 using a conventional lead tab.

Furthermore, among Examples 1 to 3, the tensile strength of Example 3, which is configured so that the protective film is located at the outermost edge after capping, was found to be the best.

### [Explanation of Reference Numerals]

100, 200, 300: Lead tab
110: First metal lead
120: Lead film
130: Second metal lead
140: Electrode tab
150: Lead bonding films
170: Protective film

## Claims

1. A lead tab for bonding to an electrode tab of an electrode assembly for a lithium secondary battery, comprising:
a first metal lead; and
a second metal lead, one end of which is in contact with the first metal lead, capping the electrode tab to form a bonding area.

2. The lead tab according to claim 1, wherein the second metal lead is in a sheet-shaped, and the sheet-like second metal lead is wound on the electrode tab to form the bonding area in which the second metal lead is wound on the electrode tab.

3. The lead tab according to claim 2, wherein the bonding area further comprises: one end of the first metal lead,
wherein, based on a vertical cross-section of the bonding area, the first end of the first metal lead is interposed between the electrode tab and the second metal lead in some area.

4. The lead tab according to claim 1, wherein a material of the second metal lead is the same as a material of the first metal lead.

5. The lead tab according to claim 2, wherein a length of the second metal lead in a direction in which the second metal lead is wound is equal to or shorter than a circumferential length of the electrode tab.

6. The lead tab according to claim 5, wherein both ends of the second metal lead in the direction in which the second metal lead is wound are secured with a lead bonding film.

7. The lead tab according to claim 1, wherein the second metal lead further comprises at least one protective film attached to a bottom surface thereof, and wherein the protective film is positioned at an outermost edge of the bonding area when the electrode tab is capped.

8. The lead tab according to claim 1, wherein the lead tab further comprises a lead film locally located on one or both sides of the first metal lead.

9. The lead tab according to claim 1, wherein the electrode tab of the electrode assembly for the lithium secondary battery is a lithium negative electrode tab of an electrode assembly for a lithium-sulfur battery.

10. A method of bonding the electrode tab of the electrode assembly for the lithium secondary battery to the lead tab according to claim 1, comprising:
a) positioning the electrode tab on any one end of the second metal lead of the lead tab;
b) capping a surface of the electrode tab by winding both ends of the second metal lead located in a direction perpendicular to a direction of bonding to the electrode tab so as to meet together; and
c) bonding the second metal lead to the electrode tab by contactless welding.

11. The method of bonding the lead tab to the electrode tab according to claim 10, wherein after capping the electrode tab with the second metal lead of the lead tab, the electrode tab is contained within an interior of the second metal lead and is not exposed to an outside.

12. The method of bonding the lead tab to the electrode tab according to claim 10, wherein the non-contact welding is ultrasonic welding or laser welding.

13. The method of bonding the lead tab to the electrode tab according to claim 10, wherein the second metal lead of step a) further comprises a protective film attached to a bottom surface thereof, wherein step c) further comprises a step of thermal fusing the protective film.

14. A lithium secondary battery comprising a structure in which the lead tab according to claim 1 is bonded to the electrode tab.

15. The lithium secondary battery according to claim 14, wherein the electrode tab and second metal lead have a thickness ratio of 7 to 15 : 1.

16. The lithium secondary battery according to claim 14, wherein the lithium secondary battery is a lithium-sulfur battery and the electrode tab is a lithium negative electrode tab.
